(19) Europäisches Patentamt
European Patent Office
Office européen des brevets

(11) **EP 2 112 568 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(51) Int Cl.:
***G05B 13/02*** *(2006.01)*

(21) Anmeldenummer: **09154976.6**

(22) Anmeldetag: **12.03.2009**

(54) **Verfahren zur rechnergestützten Steuerung und/oder Regelung eines technischen Systems**

Method for computer-supported control and/or regulation of a technical system

Procédé de commande et/ou réglage assistées par ordinateur d'un système technique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.04.2008 DE 102008020379**

(43) Veröffentlichungstag der Anmeldung:
**28.10.2009 Patentblatt 2009/44**

(73) Patentinhaber: **Siemens Aktiengesellschaft 80333 München (DE)**

(72) Erfinder:
• **Schäfer, Anton Maximilian**
  **80801 München (DE)**
• **Sterzing, Volkmar**
  **85579 Neubiberg (DE)**
• **Udluft, Steffen Dr.**
  **82223 Eichenau (DE)**

(56) Entgegenhaltungen:
**WO-A2-00/08599     WO-A2-00/55809
WO-A2-00/62250     WO-A2-2005/081076
US-A- 5 857 321**

**EP 2 112 568 B1**

## Beschreibung

Die Erfindung betrifft ein Verfahren zur rechnergestützten Steuerung und/oder Regelung eines technischen Systems und ein entsprechendes Computerprogrammprodukt.

Bei der Steuerung von komplexen technischen Systemen ist es oftmals wünschenswert, dass die am technischen System durchzuführenden Aktionen derart gewählt sind, dass ein vorteilhaftes gewünschtes dynamisches Verhalten des technischen Systems erhalten wird. Das dynamische Verhalten kann jedoch bei komplexen technischen Systemen oftmals nicht einfach vorhergesagt werden, so dass entsprechende rechnergestützte Vorhersageverfahren benötigt werden, um das zukünftige Verhalten des technischen Systems abzuschätzen und dementsprechend geeignete Aktionen zur Regelung bzw. Steuerung des technischen Systems zu wählen.

Heutzutage beruht die Steuerung von technischen Systemen oftmals auf Expertenwissen, d.h. die automatische Regelung des Systems wird auf der Basis dieses Expertenwissens erstellt. Es sind jedoch auch Ansätze bekannt, bei denen mit Hilfe von bekannten Methoden des sog. bestärkenden Lernens (Reinforcement Learning, siehe Dokument [2]) technische Systeme gesteuert werden. Die bekannten Verfahren sind jedoch nicht allgemein auf beliebige technische Systeme anwendbar und liefern oftmals keine ausreichend guten Ergebnisse.

Aus der deutschen Patentanmeldung DE 10 2007 001 025.9 ist ein Verfahren zur rechnergestützten Steuerung bzw. Regelung eines technischen Systems bekannt, bei dem eine optimale Aktionsauswahlregel rechnergestützt mit Hilfe von neuronalen Netzen gelernt wird. Dabei wird die Dynamik des technischen Systems mit Hilfe eines rekurrenten neuronalen Netzes modelliert, welches wiederum mit einem weiteren Feed-Forward-Netz gekoppelt ist, mit dem die Aktionsauswahlregel gelernt wird.

Die Druckschrift WO 00/62250 A2 offenbart die Modellierung eines dynamischen Systems unter Verwendung eines rekurrenten neuronalen Netzes umfassend eine Eingangsschicht, eine versteckte Schicht und eine Ausgangsschicht. Die Eingangsschicht umfasst zur Zustandsbeschreibung des Systems Zeitreihenwerte und weitere Eingangsgrößen, welche jeweils mit versteckten Zuständen der versteckten Schicht gekoppelt sind. Mit dem Verfahren dieser Druckschrift kann beispielsweise der dynamische Prozess in einem chemischen Reaktor modelliert werden.

Aufgabe der Erfindung ist es, ein Verfahren zur rechnergestützten Vorhersage des dynamischen Verhaltens eines technischen Systems zu schaffen, welches allgemeingültig auf beliebige technische Systeme anwendbar ist und gute Ergebnisse liefert.

In dem erfindungsgemäßen Verfahren wird Information über das dynamische Verhalten des technischen Systems für mehrere Zeitpunkte jeweils durch einen Zustand des technischen Systems und einer am technischen System durchgeführten Aktion gewonnen, wobei eine jeweilige Aktion zu einem jeweiligen Zeitpunkt in einen neuen Zustand des technischen Systems zum nächsten Zeitpunkt führt. Das technische System kann hierbei beliebig ausgestaltet sein, so dass die Zustände beliebige messbare Parameter des technischen Systems sein können. Aktionen können dabei Aktionen im eigentlichen Sinne, d.h. durchgeführte Veränderungen am technischen System, sein. Jedoch können Aktionen auch durch einstellbare Parameter bzw. Stellgrößen des technischen Systems repräsentiert werden, wobei die Aktion den entsprechenden Wert der Stellgröße bzw. des Parameters darstellt. Eine Aktion kann somit auch darin bestehen, dass eine Stellgröße nicht verändert wird.

Ein Zustand des technischen Systems wird vorzugsweise durch eine Vielzahl von Umgebungs- bzw. Zustandsvariablen charakterisiert, wobei jede Zustandsvariable eine bestimmte Messgröße des technischen Systems darstellt. Der Zustand ist somit oftmals ein Zustandsvektor. Analog umfasst die Aktion ggf. eine Mehrzahl von zu verändernden Stellgrößen, welche jeweils einen Eintrag in einem entsprechenden Aktionsvektor bilden.

In dem erfindungsgemäßen Verfahren wird in einem ersten Schritt das dynamische Verhalten des technischen Systems mit einem rekurrenten neuronalen Netz mit Hilfe von Trainingsdaten umfassend bekannte Zustände und Aktionen zu mehreren Zeitpunkten modelliert. Das rekurrente neuronale Netz ist hierbei gebildet durch wenigstens eine Eingangsschicht umfassend die Zustände des technischen Systems und die am technischen System durchgeführten Aktionen zu den mehreren Zeitpunkten, wenigstens eine versteckte rekurrente Schicht umfassend versteckte Zustände und wenigstens eine Ausgangsschicht umfassend die Zustände des technischen Systems zu den mehreren Zeitpunkten. Die Rekurrenz in dem neuronalen Netz entsteht hierbei durch die zeitliche Entwicklung des Systems, welche sich in der versteckten Schicht durch die Kopplung von versteckten Zuständen zu unterschiedlichen Zeitpunkten widerspiegelt.

Das erfindungsgemäße rekurrente neuronale Netz stellt eine Weiterentwicklung des in der deutschen Patentanmeldung DE 10 2007 001 025.9 beschriebenen Netzes dar. Die Weiterentwicklung besteht darin, dass die versteckten Zustände der versteckten Schicht des rekurrenten neuronalen Netzes zu einem jeweiligen Zeitpunkt einen ersten versteckten Zustand und einen zweiten versteckten Zustand umfassen, wobei der Zustand des technischen Systems zu dem jeweiligen Zeitpunkt aus der Eingangsschicht mit dem ersten versteckten Zustand verbunden ist und die Aktion zu dem jeweiligen Zeitpunkt aus der Eingangsschicht mit dem zweiten versteckten Zustand verbunden ist. Der erste versteckte Zustand zu dem jeweiligen Zeitpunkt ist ferner mit dem zweiten versteckten Zustand zu dem jeweiligen Zeitpunkt über eine Matrix gekoppelt, welche bei der Modellierung des dynamischen Verhaltens des technischen Systems gelernt wird. Der Begriff Matrix ist dabei weit auszulegen und kann gegebenenfalls auch ein Skalar (d.h. eine 1 x 1-Matrix) umfassen. Auf diese Weise wird die Dynamik des technischen Systems durch die Berücksichtigung einer entsprechenden Matrix zwischen versteckten Zuständen zum gleichen Zeitpunkt besser gelernt als dies in dem Verfahren der deutschen Patentanmeldung DE 10 2007 001 025.9 der Fall ist. In der DE 10 2007 001 025.9 sind versteckte Zustände zum gleichen Zeitpunkt über eine Identitätsmatrix miteinander gekoppelt.

Anschließend wird in einem zweiten Schritt des erfindungsgemäßen Verfahrens eine Aktionsauswahlregel gelernt. Das Lernen erfolgt hierbei derart, dass das rekurrente neuronale Netz, welches im ersten Schritt mit den Trainingsdaten trainiert wurde, für einen aktuellen und zukünftige Zeitpunkte mit einem weiteren neuronalen Netz gekoppelt wird, wobei das weitere neuronale Netz wenigstens eine Eingangsschicht, wenigstens eine versteckte Schicht umfassend versteckte Zustände und wenigstens eine Ausgangsschicht umfasst. Die Eingangsschicht des weiteren neuronalen Netzes umfasst dabei zu einem jeweiligen Zeitpunkt wenigstens einen Teil der versteckten Zustände des rekurrenten neuronalen Netzes zu dem jeweiligen Zeitpunkt und die Ausgangsschicht des weiteren neuronalen Netzes umfasst zu einem jeweiligen Zeitpunkt die am technischen System durchgeführte Aktion zu dem jeweiligen Zeitpunkt und/oder die Veränderung der am technischen System durchgeführten Aktion gegenüber der zeitlich vorhergehenden Aktion. Sollte es sich somit bei einer Aktion um eine Aktion im eigentlichen Sinne handeln, bei der mit der Durchführung einer Aktion eine Veränderung von Parametern des technischen Systems verbunden ist, umfasst die Ausgangsschicht die am technischen System durchgeführte Aktion selbst. Sollte die Aktion jedoch durch eine Stellgröße bzw. einen Parameter des technischen Systems selbst repräsentiert werden, umfasst die Ausgangsschicht die Veränderung dieser Aktion (d.h. der Stellgröße) gegenüber der zeitlich vorhergehenden Aktion (d.h. der zeitlich vorhergehenden Stellgröße).

Das weitere neuronale Netz übernimmt erfindungsgemäß die Aufgabe der optimalen Steuerung des technischen Systems im Hinblick auf die zukünftigen Aktionen unter Berücksichtigung der modellierten Dynamik des technischen Systems, welche im ersten Schritt durchgeführt wurde.

Schließlich werden in dem erfindungsgemäßen Verfahren mit dem rekurrenten neuronalen Netz, welches mit dem weiteren neuronalen Netz gekoppelt ist und mit dem die Aktionsauswahlregel gelernt wurde, Zustände des technischen Systems und/oder am technischen System durchzuführende, vorzugsweise optimale Aktionen bestimmt. Auf der Basis der ermittelten Zustände bzw. Aktionen kann das technische System dann entsprechend geregelt bzw. gesteuert werden. Es hat sich hierbei gezeigt, dass eine derartige Netzwerkarchitektur ein dateneffizientes Lernen des dynamischen Verhaltens eines technischen Systems ermöglicht. Die Dateneffizienz ist hierbei von hoher Bedeutung, da in den meisten technischen Systemen das verfügbare bzw. relevante Datenmaterial stark limitiert ist.

In einer bevorzugten Ausführungsform des erfindungsgemäßen Verfahrens umfassen die ersten versteckten Zustände der versteckten rekurrenten Schicht des rekurrenten neuronalen Netzes jeweils eine erste Anzahl an Variablen und die zweiten versteckten Zustände der versteckten rekurrenten Schicht umfassen eine zweite Anzahl an Variablen, wobei die erste Anzahl unterschiedlich zur zweiten Anzahl ist. Insbesondere ist die erste Anzahl kleiner als die zweite Anzahl oder umgekehrt. Auf diese Weise kann eine Flaschenhals-Struktur (englisch: bottleneck) erzeugt werden, mit der sich das Lernen des rekurrenten neuronalen Netzes auf die wesentliche, autonome Struktur der Dynamik konzentriert. Hierdurch wird eine verbesserte Modellierung des technischen Systems erreicht, was wiederum zu einem verbesserten Lernen der Aktionsauswahlregel durch das weitere neuronale Netz führt.

Analog zu den versteckten Zuständen umfassen auch Zustände des technischen Systems und die Aktionen vorzugsweise mehrere Variablen. Ebenso bestehen die versteckten Zustände des Weiteren neuronalen Netzes vorzugsweise aus mehreren versteckten Variablen. Insbesondere ist hierbei die Anzahl der versteckten Variablen eines versteckten Zustands des rekurrenten und/oder des Weiteren neuronalen Netzes kleiner als die Anzahl der Umgebungsvariablen eines Zustands des technischen Systems. Die Anzahl der versteckten Zustände wird dabei vorzugsweise derart gewählt, dass das Verfahren zum einen dateneffizient ist und zum anderen dennoch gute Ergebnisse liefert.

Wie bereits erwähnt, können Aktionen durch Stellgrößen repräsentiert sein, so dass eine Aktion auch darin bestehen kann, dass eine Stellgröße nicht verändert wird. Alternativ oder zusätzlich ist es jedoch auch möglich, dass eine Mehrzahl von diskreten, am technischen System durchführbare Aktionen vorgegeben sind, wobei die Ausgangsschicht des weiteren neuronalen Netzes zumindest teilweise zu einem jeweiligen Zeitpunkt die am technischen System durchgeführte diskrete Aktion anstatt der Veränderung der Aktion umfasst.

In einer besonders bevorzugten Ausführungsform, bei der die Aktionen zumindest teilweise durch Stellgrößen repräsentiert werden, ist die Veränderung der zu dem jeweiligen Zeitpunkt durchgeführten Aktion gegenüber der zeitlich vorhergehenden Aktion in der Ausgangsschicht des weiteren neuronalen Netzes mit der Aktion zu dem jeweiligen Zeitpunkt in der Eingangsschicht des rekurrenten neuronalen Netzes über eine Kopplungsmatrix gekoppelt. Diese Matrix kann gegebenenfalls auch ein Skalar (1 x 1-Matrix) sein. Mit Hilfe dieser Kopplungsmatrix kann hierbei eine Skalierung bzw. Beschränkung der möglichen Werte der Aktionen erreicht werden, wodurch eine effiziente Anpassung des Lernens der Aktionsauswahlregel in Abhängigkeit von dem technischen System dahingehend erfolgen kann, dass ausschließlich in dem technischen System mögliche bzw. sinnvolle Aktionen über die Kopplungsmatrix ermöglicht werden. Vorzugsweise ist dabei die Aktion zu dem jeweiligen Zeitpunkt in der Eingangsschicht des rekurrenten neuronalen Netzes mit der zeitlich vorhergehenden Aktion über eine Einheitsmatrix gekoppelt.

In einer weiteren Ausgestaltung des erfindungsgemäßen Verfahrens umfasst die Eingangsschicht des weiteren neuronalen Netzes zu einem jeweiligen Zeitpunkt den ersten versteckten Zustand des rekurrenten neuronalen Netzes zu dem jeweiligen Zeitpunkt. Der zweite versteckte Zustand ist bei dieser Ausführungsform nicht mit dem weiteren neuronalen Netz gekoppelt.

In einer bevorzugten Ausführungsform wird die Aktionsauswahlregel gemäß einer Bewertungsfunktion gelernt, welche ein oder mehrere Kriterien in Bezug auf die Zustände des technischen Systems und/oder die am technischen System durchgeführten Aktionen berücksichtigt und/oder welche im Schritt der Modellierung des dynamischen Verhaltens des technischen Systems gelernt wird.

In einer besonders bevorzugten Ausführungsform wird als weiteres neuronales Netz in dem erfindungsgemäßen Verfahren ein Feed-Forward-Netz eingesetzt, bei dem die Neuronen der versteckten Schichten zeitlich nicht rückgekoppelt sind.

In einer weiteren Variante der Erfindung wird die Bewertungsfunktion derart gewählt, dass sie ein optimales dynamisches Verhalten des technischen Systems parametrisiert. Auf diese Weise kann durch entsprechende Wahl der Bewertungsfunktion die optimale Steuerung des technischen Systems realisiert werden. Hierbei kann die Bewertungsfunktion beispielsweise durch eine zu optimierende Kostenfunktion repräsentiert werden.

Bei der Modellierung des dynamischen Verhaltens des technischen Systems durch das rekurrente neuronale Netz im ersten Schritt des erfindungsgemäßen Verfahrens wird in einer besonders bevorzugten Ausführungsform der Fehler zwischen den durch das rekurrente neuronale Netz bestimmten Zuständen und den Zuständen der Trainingsdaten minimiert.

In einer besonders bevorzugten Ausführungsform wird das erfindungsgemäße Verfahren dazu verwendet, um mit dem Verfahren ein nichtlineares dynamisches Verhalten eines technischen Systems zu modellieren und/oder um eine nichtlineare Aktionsauswahlregel zu lernen.

In einer weiteren Ausgestaltung des erfindungsgemäßen Verfahrens wird zur Modellierung des dynamischen Verhaltens des technischen Systems mit dem rekurrenten neuronalen Netz im ersten Schritt des Verfahrens und/oder zum Lernen der Aktionsauswahlregel im zweiten Schritt des Verfahrens ein Backpropagation-Verfahren eingesetzt. Solche Backpropagation-Verfahren sind hinlänglich aus dem Stand der Technik bekannt und es wird hierbei insbesondere das in der Druckschrift [1] beschriebene Verfahren verwendet.

Das rekurrente neuronale Netz, mit dem das dynamische Verhalten des technischen Systems modelliert wird, ist vorzugsweise ein Netz mit dynamisch konsistenter zeitlicher Entfaltung unter Berücksichtigung zukünftiger Zustände und Aktionen, welches im Englischen als "Recurrent Neural Network with Dynamically Consistent Overshooting" bezeichnet wird. In einem solchen Netz werden die eigenen Vorhersagen des Netzes in der Ausgangsschicht als ein Ersatz für künftige Eingaben in der Eingangsschicht verwendet.

In einer besonders bevorzugten Ausführungsform des erfindungsgemäßen Verfahrens wird die Modellierung des technischen Systems mit dem rekurrenten neuronalen Netz durch folgende Gleichungen repräsentiert:

$$\overline{s}_\tau = \tanh(\hat{A}\hat{s}_\tau + Da_\tau^d + \theta)$$

$$x_{\tau+1} = C\overline{s}_\tau$$

mit

$$\hat{s}_\tau = \begin{cases} A\overline{s}_{\tau-1} + Bx_\tau^d & \forall \ \tau \le t \\ A\overline{s}_{\tau-1} + Bx_\tau & \forall \ \tau > t \end{cases}$$

$$\sum_t \sum_\tau (x_\tau - x_\tau^d)^2 \to \min_{A,\hat{A},B,C,D,\theta}$$

wobei der Wertebereich von $\tau$ eine vorbestimmte Anzahl m von Zeitschritten vor dem Zeitpunkt t und eine vorbestimmte Anzahl n von Zeitschritten nach dem Zeitpunkt t umfasst;

wobei $t \in \{m,...,T\text{-}n\}$, wobei T die Anzahl an Zeitpunkten, für welche Trainingsdaten vorliegen;

wobei $x_\tau$ den durch das rekurrente neuronale Netz bestimmten Zustand des technischen Systems zum Zeitpunkt $\tau$ repräsentiert;

wobei $x_\tau^d$ den Zustand des technischen Systems zum Zeitpunkt $\tau$ gemäß den Trainingsdaten repräsentiert;

wobei $a_\tau$ die durch das rekurrente neuronale Netz bestimmte Aktion zum Zeitpunkt $\tau$ repräsentiert;

wobei $a_\tau^d$ die am technischen System zum Zeitpunkt $\tau$ durchgeführte Aktion gemäß den Trainingsdaten repräsentiert;

wobei $\hat{s}_\tau$ den ersten versteckten Zustand und $\overline{s}_\tau$ den zweiten versteckten Zustand zum Zeitpunkt $\tau$ der versteckten Schicht des rekurrenten neuronalen Netzes repräsentieren;

wobei **I** die Einheitsmatrix und Â, A, B, C, D zu bestimmende Matrizen und $\theta$ ein zu bestimmender Bias sind.

Als Ergebnis erhält man mit Hilfe der Gleichungen die entsprechenden Matrizen A, Â, B, C, D und den entsprechenden Bias $\theta$, welche derart gewählt sind, dass der quadratische Fehler zwischen vorhergesagten und tatsächlichen Zuständen minimiert ist.

Im zweiten Schritt werden schließlich die Matrizen A, Â, B, C und D sowie der Parameter $\theta$ festgehalten, und das Lernen der Belohnungsregel wird dann vorzugsweise mit Hilfe folgender Gleichungen durchgeführt:

$$\overline{s}_\tau = \begin{cases} \tanh\left(\hat{A}\hat{s}_\tau + Da_\tau^d + \theta\right) & \forall\ \tau > t \\ \tanh\left(\hat{A}\hat{s}_\tau + Da_\tau + \theta\right) & \forall\ \tau \geq t \end{cases}$$

$$R_{\tau+1} = Gh(C\overline{s}_\tau)$$

für alle $\tau \geq t$
mit

$$\hat{s}_\tau = \begin{cases} A\overline{s}_{\tau-1} + Bx_\tau^d & \forall\ \tau \leq t \\ A\overline{s}_{\tau-1} + Bx_\tau & \forall\ \tau > t \end{cases}$$

und

$$a_\tau = a_{\tau-1} + Hf(F\tanh(E\hat{s}_\tau + b))$$

für alle $\tau \geq t$

$$\sum_t \sum_{\tau>t} c(R_\tau) \rightarrow \min_{E,F,b}$$

wobei G eine Matrix und h eine beliebige Aktivierungsfunktion ist, welche den Zustand $x_{\tau+1}$ des technischen Systems auf einen für die Kostenfunktion $c(\cdot)$ relevanten Zustand $R_{\tau+1}$ abbilden;

wobei f eine beliebige Aktivierungsfunktion ist;

wobei E und F zu bestimmende Matrizen und b ein zu bestimmender Bias sind;

wobei H eine beliebige Matrix zur Adaption der Veränderung der Aktion zum jeweiligen Zeitpunkt gegenüber der zeitlich vorhergehenden Aktion ist.

Wie bereits erwähnt, können die Funktionen f und h beliebige Aktivierungsfunktionen sein, insbesondere können sie auch die Identitätsabbildung darstellen.

Das erfindungsgemäße Verfahren kann für beliebige technische Systeme eingesetzt werden. Ein Anwendungsfall ist z.B. eine Turbine, insbesondere eine Gasturbine.

Die Steuerung des technischen Systems erfolgt derart, dass am Anfang der Steuerung zunächst alle Schritte des erfindungsgemäßen Verfahrens bis auf den eigentlichen Aktionsauswahlschritt durchgeführt werden und anschließend das sich daraus ergebende mit dem weiteren neuronalen Netz gekoppelte rekurrente neuronale Netz mit gelernter Aktionsauswahlregel zur Auswahl der Aktionen, die zur Steuerung des technischen Systems durchgeführt werden, eingesetzt wird. Die Steuerungsregeln werden somit einmal festgelegt und während des Steuerns des technischen Systems nicht mehr verändert.

Alternativ ist es auch möglich, dass während der Durchführung der Steuerung des technischen Systems in regelmäßigen Abständen alle Schritte des erfindungsgemäßen Verfahrens (außer der eigentlichen Aktionsauswahl) durchgeführt werden, wobei bei der Durchführung dieser Schritte die sich während der Steuerung neu ergebenden Zustände und Aktionen als neue und/oder weitere Trainingsdaten berücksichtigt werden. Nach der Durchführung dieser Schritte des erfindungsgemäßen Verfahrens wird anschließend dann das sich daraus ergebende, mit dem weiteren neuronalen Netz gekoppelte rekurrente neuronale Netz mit gelernter Aktionsauswahlregel zur Auswahl weiterer Aktionen verwendet. Auf diese Weise wird ein Online-Lernen der Regelung während der Steuerung des technischen Systems gewährleistet.

Neben den oben beschriebenen Verfahren umfasst die Erfindung ferner ein Computerprogrammprodukt mit einem auf einem maschinenlesbaren Träger gespeicherten Programmcode zur Durchführung des erfindungsgemäßen Steuerungsverfahrens, wenn das Programm auf einem Rechner abläuft.

Ausführungsbeispiele der Erfindung werden nachfolgend anhand der beigefügten Figuren detailliert beschrieben.

Es zeigen:

Fig. 1 eine schematische Darstellung, welche die Modellierung eines technischen Systems mit einem rekurrenten neuronalen Netz gemäß einer Ausführungsform der Erfindung zeigt;

Fig. 2 eine schematische Darstellung, welche das Lernen einer Aktionsauswahlregel durch das rekurrente neuronale Netz der Fig. 1 in Kombination mit einem Feed-Forward-Netz gemäß einer Ausführungsform der Erfindung wiedergibt;

Nachfolgend wird das erfindungsgemäße Verfahren detailliert beschrieben. Das Verfahren ist hierbei auf jede beliebige Art von technischem System anwendbar, dessen dynamisches Verhalten sich durch einen Zustandsraum X und einen Aktionsraum A mit einer (stochastischen) Übergangsfunktion $P(x_t, a_t, x_{t+1})$ beschreiben lässt. Hierbei sind $x_t$, $x_{t+1} \in X$ Zustände des technischen Systems zu den Zeitpunkten t bzw. t+1, wobei jeder Zustand durch eine Mehrzahl von Zustand- bzw. Umgebungsvariablen charakterisiert ist. Diese Umgebungsvariablen sind dabei messbare Zustandsgrößen des technischen Systems, beispielsweise der Gasdruck, die Gastemperatur, Brennkammerbeschleunigungen und dergleichen in einer Gasturbine. Die Aktionen $a_t \in A$ sind hierbei Veränderungen von Stellgrößen des technischen Systems zum Zeitpunkt t, welche wiederum Einfluss auf spätere Zustände des technischen Systems haben. Analog zum Zustand $x_t$ kann auch die Aktion $a_t$ eine Mehrzahl von Aktionsvariablen umfassen, und eine Aktion kann somit durch die Veränderung von mehreren Stellgrößen charakterisiert sein. Ein Beispiel von einer an einem technischen System veränderbarer Stellgröße ist die Einstellung von Ventilen in einer Gasturbine. Oftmals sind die technischen Systeme auch so ausgelegt, dass sich der Zustandsraum und der Aktionsraum überschneiden, d.h. dass eine Stellgröße im technischen System auch den Zustand des technischen Systems charakterisiert.

Die obige Beschreibung des technischen Systems mit Hilfe eines Zustandsraums X, eines Aktionsraums A und einer stochastischen Übergangsfunktion P entspricht dem aus der Stand der Technik bekannten Markov Entscheidungsprozess MDP (MDP = Markov Decision Process). Es wird somit davon ausgegangen, dass das technische System mit einem solchen Prozess beschrieben werden kann. Für diesen Prozess existiert eine Belohnungs- oder Kostenfunktion $c: X \times A \rightarrow R$, wobei R den Raum der Belohnungen darstellt, welche das System für die Wahl einer Aktion $a_t$ im Zustand $x_t$ erhält. Es ist nunmehr das Ziel, eine optimale Regel $\Pi: X \rightarrow A$ zu bestimmen, welche die erwartete kumulierte oder durchschnittliche Belohnungsfunktion c für jeden Zustand $x_t$ maximiert. Das Maximieren der Belohnungsfunktion c entspricht dabei einer möglichen Ausgestaltung einer Aktionsauswahlregel, wie sie in den Ansprüchen definiert ist. Die Belohnungsfunktion wird insbesondere so festgelegt, dass sie erwünschte Eigenschaften des technischen Systems widerspiegelt, wobei das Optimum dann erreicht wird, wenn die Funktion maximal ist. Im einfachsten Fall könnte die Kostenfunktion beispielsweise ein vorteilhafter gewünschter Zustand des technischen Systems sein, der dann optimal ist, wenn er einen Maximalwert aufweist. Im Folgenden wird davon ausgegangen, dass das technische System ein deterministischer Markov Entscheidungsprozess mit diskreten Zeitschritten ist, wobei die Zustandsräume X und A kontinuierlich sind.

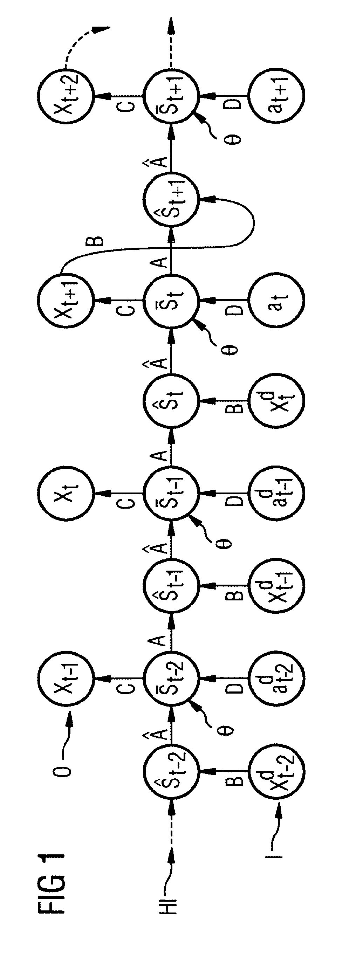

Gemäß der Erfindung wird ein Markov Entscheidungsprozess mit einem rekurrenten neuronalen Netz RNN modelliert, wodurch eine Abbildung des dynamischen Verhaltens des technischen Systems, d.h. der Übertragungsfunktion P(·) durch eine hochdimensionale nichtlineare Systemgleichung abgebildet wird. Das in der hier beschriebenen Variante der Erfindung verwendete rekurrente neuronale Netz RNN ist dabei in Fig. 1 gezeigt. Das rekurrente neuronale Netz umfasst eine Eingangsschicht I, welche die Zustände und die Aktionen zu den einzelnen Zeitpunkten zeigt. Beispielhaft sind in Fig. 1 die Zustände $x_{t-2}^d$, $x_{t-1}^d$ und $x_t^d$ sowie die Aktionen $a_{t-2}^d$, $a_{t-1}^d$, $a_t$ und $a_{t+1}$ wiedergegeben. Die Zustände $x_{t-1}^d$ und $x_t^d$ sowie die Aktionen $a_{t-2}^d$ und $a_{t-1}^d$ sind dabei bekannte Zustände bzw. Aktionen aus einem Trainingsdatensatz für das rekurrente neuronale Netz. In der hier beschriebenen Ausführungsform werden die einzelnen Aktionen als Stellgrößen repräsentiert, d.h. eine Aktion stellt die Einstellung einer Stellgröße dar. In diesem Sinne kann eine Aktion auch darin bestehen, dass an der Stellgröße keine Veränderung vorgenommen wird, wenn sich der Wert der Stellgröße vom vorhergehenden zum nächsten Zeitschritt nicht verändert. In diesem Sinne können Aktionen auch sog. "Null-Aktionen" umfassen, welche darin bestehen, dass keine Veränderung an einer Stellgröße vorgenommen wird. Eine Stellgröße im Sinne der Erfindung ist ein beliebiger Parameter, dessen Größe bzw. Wert am technischen System direkt beeinflusst werden kann. Die Veränderung von Stellgrößen hat einen Einfluss auf den Zustand des technischen Systems, wobei sich ein Zustand von einer Stellgröße darin unterscheidet, dass auf einen Zustand nicht notwendigerweise direkt Einfluss genommen werden kann. Stellgrößen können in diesem Sinne auch als eine Untermenge von Zuständen des technischen Systems angesehen werden, deren Wert direkt durch eine Aktion beeinflussbar ist.

Die Eingangsschicht I des Netzes der Fig. 1 ist mit einer versteckten Schicht HI über entsprechende Matrizen B und D gekoppelt, welche nachfolgend noch näher definiert sind. Die versteckte, rekurrente Schicht HI weist versteckte Zustände für jeden Zeitpunkt auf, wobei in Fig. 1 beispielhaft die Zustände $\hat{s}_{t-2}, \bar{s}_{t-2}, \hat{s}_{t-1}, \bar{s}_{t-1}, \hat{s}_t, \bar{s}_t, \hat{s}_{t+1}$ und $\bar{s}_{t+1}$ wiedergegeben sind. Die Zustände mit einem Dach über dem Buchstaben s entsprechen dabei den ersten versteckten Zuständen im Sinne von Anspruch 1 und die Zustände mit den Balken über dem Buchstaben s entsprechen den zweiten versteckten Zuständen im Sinne von Anspruch 1. Der erste und zweite Zustand sind dabei zu einem jeweiligen Zeitpunkt über die Matrix Â miteinander gekoppelt, wobei diese Matrix beim Lernen der Dynamik des technischen Systems mitgelernt wird. In der Ausführungsform des Netzes der Fig. 1 unterscheidet sich die Dimension der ersten versteckten Zustände von der Dimension der zweiten versteckten Zuständen, vorzugsweise ist die Dimension des jeweiligen ersten versteckten Zustands kleiner als die Dimension eines zweiten versteckten Zustands, jedoch ist auch die umgekehrte Richtung denkbar. Durch die Verwendung der zusätzlich zu lernenden Matrix Â wird eine Flaschenhals-Struktur erzeugt, die in dem rekurrenten neuronalen Netz gemäß der deutschen Patentanmeldung DE 10 2007 001 025.9 nicht vorhanden ist. Dort wurde anstatt der Matrix Â die Einheitsmatrix verwendet. Die Flaschenhals-Struktur zwingt das Netzwerk, sich auf die wesentliche, autonome Struktur der Dynamik zu konzentrieren. Neben der sich daraus ergebenden besseren Approximation der Dynamik wirkt sich dies insbesondere auf eine verstärkte Berücksichtigung der Aktionen aus. Die Flaschenhals-Struktur erhöht zum einen den zeitnahen Einfluss der Aktionen auf die Systemdynamik. Zum anderen verbessert sich auch die Aktionenauswahl, da diese auf der besseren Approximation der Dynamik basiert.

In der versteckten Schicht HI ist ferner der zweite versteckte Zustand zu einem Zeitpunkt mit dem ersten versteckten Zustand zum nächsten Zeitpunkt über die Matrix A gekoppelt. Ferner wird für jeden zweiten versteckten Zustand ein Bias θ berücksichtigt. Das rekurrente neuronale Netz der Fig. 1 weist ferner eineAusgangsschicht O auf, welche durch die Zustände des technischen Systems gebildet ist, wobei in Fig. 1 die Zustände $x_{t-1}$, $x_t$, $x_{t+1}$ und $x_{t+2}$ wiedergegeben sind. Diese Zustände sind jeweils mit den versteckten Zuständen $\bar{s}_{t-2}, \bar{s}_{t-1}, \bar{s}_t$ und $\bar{s}_{t+1}$ durch eine Matrix C gekoppelt.

Das neuronale Netz gemäß Fig. 1 ist ein Netz mit dynamisch konsistenter zeitlicher Entfaltung unter Berücksichtigung zukünftiger Zustände, was im Englischen bezeichnet wird als "Neural Network with Dynamically Consistent Overshooting". Dies bedeutet, dass bei der Modellierung des neuronalen Netzes nicht nur Zeitpunkte τ in der Vergangenheit, sondern auch Zeitpunkte τ in der Zukunft berücksichtigt werden und die eigenen vorhergesagten Zustände des Netzes in der Ausgangsschicht als Eingaben für künftige Zustände in der Eingangsschicht verwendet werden. Der Parameter τ wird begrenzt durch die Länge der zurückliegenden Entfaltung m und der Länge des so genannten Overshootings n, so dass gilt: τ ∈ {t-m,...,t+n} für alle betrachteten Zeitpunkte t ∈ {m,...,T-n}, wobei T die Anzahl an zur Verfügung stehenden Zeitpunkten repräsentiert, für die Trainingsdaten zum Lernen des neuronalen Netzes vorliegen.

Das Overshooting ergibt sich aus Fig. 1 dadurch, dass auch zukünftige Zeitpunkte $\tau > t$ bei der Modellierung des technischen Systems durch das neuronale Netz berücksichtigt werden. Da diese zukünftigen Zeitpunkte nicht bekannt sind, werden die über das Netz in der Ausgangsschicht ausgegebenen Zustände auch wieder als Eingabe für den nächsten Zeitschritt verwendet. Dies ist in Fig. 1 für den Zeitpunkt t+1 gezeigt, bei dem der ausgegebene Zustand $x_{t+1}$ wiederum dem ersten versteckten Zustand $\hat{s}_{t+1}$ der versteckten Schicht HI zugeführt wird.

In der hier beschriebenen Ausführungsform der Erfindung wird somit eine Sequenz an Zuständen $x_\tau$ und Aktionen $a_\tau$ auf der Eingangsseite des rekurrenten neuronalen Netzes geschaffen,

wobei das Netz zeitlich in einem vorgegebenen Intervall, welches die Vergangenheit und die Zukunft berücksichtigt, entfaltet ist. Mathematisch lässt sich das rekurrente neuronale Netz der Fig. 1 durch die folgenden Gleichungen beschreiben,

wobei in den Gleichungen die oben erwähnten Matrizen Â, A, B, C, D sowie der Bias $\theta$ enthalten sind:

$$\bar{s}_\tau = \tanh(\hat{A}\hat{s}_\tau + Da_\tau^d + \theta)$$

$$x_{\tau+1} = C\bar{s}_\tau$$

mit

$$\hat{s}_\tau = \begin{cases} As_{\tau-1} + Bx_\tau^d & \forall \ \tau \leq t \\ A\bar{s}_{\tau-1} + Bx_\tau & \forall \ \tau > t \end{cases}$$

Der erste versteckte Zustand $\hat{s}_\tau$ ist dabei ein Prä-Zustand, der die Information von einem vorhergehenden zweiten versteckten Zustand $\bar{s}_{\tau-1}$ und von dem externen Zustand $x_\tau^d$ aggregiert. Der Nichtlinearität in der versteckten Schicht wird hierbei mit dem Tangens Hyperbolicus ausgedrückt. Der Prä-Zustand $\hat{s}_\tau$ weist in der hier beschriebenen Ausführungsform eine niedrigere Dimension als der zweite versteckte Zustand $\bar{s}_\tau$ auf und ist mit diesem über die Matrix Â verbunden, welche während des Trainings des neuronalen Netzes gelernt wird. Auf diese weise wird eine vorteilhafte Flaschenhals-Struktur geschaffen.

Der zweite versteckte Zustand $\bar{s}_\tau$ weist als Eingang eine Aktion $a_\tau^d$ bzw. $a_\tau$ auf und wird zur Berechnung des erwarteten nächsten Zustands $x_{\tau+1}$ des technischen Systems verwendet. Die Matrix D ist eine zusätzliche Matrix mit geeigneter Dimension, welche den Einfluss der Aktionen $a_\tau^d$ bzw. $a_\tau$ auf den Zustand $\bar{s}_\tau$ berücksichtigt. Die Aktionen $a_\tau$ werden dem neuronalen Netz RNN als zukünftige Eingaben ($\tau > t$) bereitgestellt, da sie die Dynamik des technischen Systems nicht direkt beeinflussen und deshalb nicht durch das Netz gelernt werden sollten. Um eine Vielzahl von möglichen Zuständen in dem Zustandsraum X des technischen Systems abzudecken, sollte das rekurrente neuronale Netz zur Modellierung des technischen Systems mit Trainingsdaten modelliert werden, bei denen die Aktionen $a_\tau^d$ zufällig gewählt sind. Ansonsten kann die gelernte Dynamik u.U. abhängig von einer bestimmten Regel sein.

Ziel des erfindungsgemäßen Verfahrens ist es nunmehr, ein mit Trainingsdaten gelerntes neuronales Netz der Fig. 1 mit einem bestärkenden Lernen (Reinforcement Learning) zum Erlernen der oben genannten optimalen Regel $\Pi$ zu kombinieren. Dies wird erfindungsgemäß dadurch erreicht, dass das rekurrente neuronale Netz der Fig. 1 mit einem weiteren sog. Kontrollnetz kombiniert wird, wodurch die obige Belohnungsfunktion c in dem neuronalen Netz implementiert wird.

In der hier beschriebenen Ausführungsform ist das zusätzliche Kontrollnetz ein dreischichtiges neuronales Feed-Forward-Netz mit einer Eingangsschicht, einer versteckten Schicht und einer Ausgangsschicht. Auch wenn weitere, komplexere Topologien möglich wären, kann mit dem hier beschriebenen Modell jede beliebige Art von Kontrollfunktion modelliert werden. Da die optimale Aktion $a_\tau$ vorhergesagt werden soll, wird das Kontrollnetz nur für in der Zukunft liegende Zeitpunkte (d.h. $\tau > t$) mit dem rekurrenten neuronalen Netz gekoppelt. Für die vergangene zeitliche Entfaltung (d.h. $\tau < t$) werden in dem rekurrenten neuronalen Netz die zuvor zugeführten Aktionen verwendet.

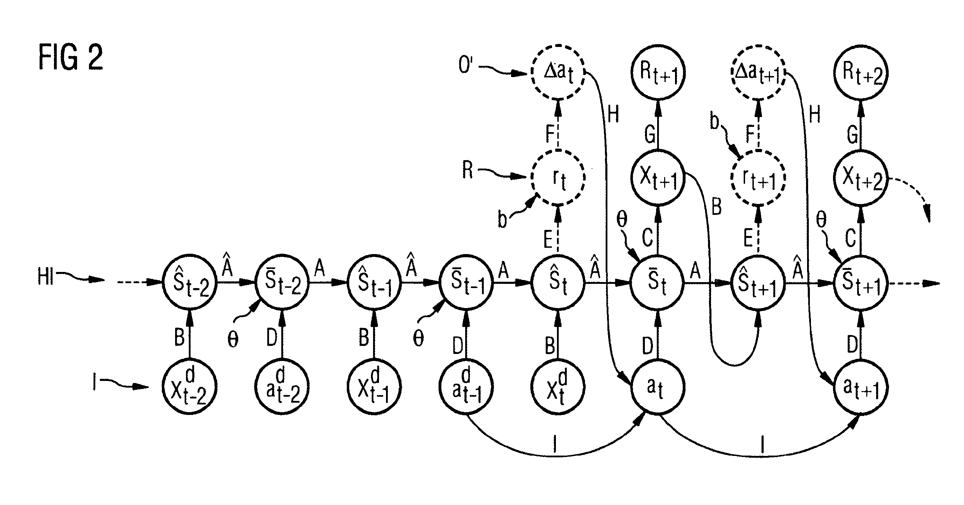

Fig. 2 zeigt das mit dem weiteren Feed-Forward-Netz gekoppelte rekurrente neuronale Netz, welches nachfolgend auch als RCNN (RCNN = Recurrent Control Neural Network) bezeichnet wird. Die Teile des Netzes, welche sich auf das Feed-Forward-Kontrollnetz beziehen, sind hierbei gestrichelt dargestellt. Das Kontrollnetz verwendet als Eingangsschicht die ersten versteckten Zustände $\hat{s}_t, \hat{s}_{t+1},...$, usw., welche mit einer versteckten Schicht R mit entsprechenden Zuständen $r_t$, $r_{t+1}$ usw. gekoppelt sind. Die versteckten Zustände $r_\tau$ sind hierbei mit den Zuständen $\hat{s}_\tau$ über eine Matrix E sowie einen Bias b gekoppelt, d.h. es gilt:

$$r_\tau = \tanh(E\hat{s}_\tau + b)$$

Die versteckten Zustände $r_\tau$ sind ferner über eine Matrix F mit den zu modellierenden künftigen Aktionsveränderungen $\Delta a_\tau$ gekoppelt, wobei die Aktionsveränderungen in der hier beschriebenen Ausführungsform Stellgrößenveränderungen entsprechen. Die Aktionsveränderung $\Delta a_t$ bzw. $\Delta a_{t+1}$ ist dabei über eine Matrix H mit der vorherzusagenden Aktion $a_t$ bzw. $a_{t+1}$ gekoppelt, wobei mit der Matrix H eine entsprechende Beschränkung bzw. Skalierung der Aktionsänderung herbeigeführt werden kann. Insbesondere wird hierdurch auf einfache Weise sichergestellt, dass nur solche Aktionsänderungen ermöglicht werden, welche auf dem betrachteten System auch tatsächlich nur möglich sind. Aktionsänderungen, die im Realbetrieb des technischen Systems nicht auftreten können bzw. nicht sinnvoll sind (weil sie beispielsweise zu einer Zerstörung oder Beschädigung des Systems führen) werden somit mit der Matrix H verhindert.

Da sich eine neue Aktion $a_\tau$ ($_\tau \geq t$) aus der vorhergehenden Aktion $a_{\tau-1}^d$ bzw. $a_{\tau-1}$ und der entsprechenden Aktionsänderung $\Delta a_t$ zusammensetzt, fließen gemäß Fig. 2 in die Aktionen $a_\tau$ auch die früheren Aktionen $a_{\tau-1}^d$ bzw. $a_{\tau-1}$ über die Identitätsmatrix **I** ein. Darüber hinaus existiert eine Matrix G, welche zukünftige Zustände $x_{t+1}$, $x_{t+2}$ usw. mit Zuständen $R_{t+1}$, $R_{t+2}$ usw. koppelt, wobei letztere für die Berechnungsregel relevante Zustände sind.

Das gemäß der Erfindung verwendete neuronale Netz RCNN muss zwei unterschiedliche Aufgaben erfüllen. Zum einen muss es die Dynamik des zugrunde liegenden technischen System identifizieren und zum anderen muss es eine optimale Steuerung des technischen Systems mit Hilfe einer entsprechenden Aktionsauswahl- bzw. Belohnungsregel erreichen. Das Netz wird somit in zwei aufeinander folgenden Schritten trainiert, nämlich einem Schritt zum Lernen des rekurrenten neuronalen Netzes mit Trainingsdaten und einem Schritt zum Lernen einer Belohnungsregel durch Kopplung des rekurrenten neuronalen Netzes mit einem Feed-Forward-Netz. Dieser erfindungsgemäße Ansatz unterscheidet sich von herkömmlichen Verfahren, bei denen ein kombiniertes Lernen beider Aufgaben in einem Schritt versucht wird.

In dem ersten Schritt des erfindungsgemäßen Verfahrens wird zunächst die Dynamik des zugrunde liegenden Markov Entscheidungsprozesses modelliert, der dem dynamischen Verhalten eines technischen Systems entspricht. Das Netzwerk RCNN wird demzufolge auf ein rekurrentes neuronales Netz RNN mit dynamisch konsistenter zeitlicher Entfaltung unter Berücksichtigung zukünftiger Zustände reduziert. Dieser erste Schritt wird mathematisch durch folgende Gleichungen repräsentiert:

$$\bar{s}_\tau = \tanh(A\hat{s}_\tau + Da_\tau^d + \theta) \qquad (1)$$

$$x_{\tau+1} = C\bar{s}_\tau \qquad (2)$$

mit

$$\hat{s}_\tau = \begin{cases} A\bar{s}_{\tau-1} + Bx_\tau^d & \forall \; \tau \le t \\ A\bar{s}_{\tau-1} + Bx_\tau & \forall \; \tau > t \end{cases} \qquad (3)$$

$$\sum_t \sum_\tau (x_\tau - x_\tau^d)^2 \to \min_{A,\hat{A},B,C,D,\theta} \qquad (4)$$

Die letzte Gleichung stellt hierbei die Aufgabe des Trainings dar, bei dem erreicht werden soll, dass ein Zustand $x_\tau$, der durch das rekurrente neuronale Netz RNN bestimmt ist, möglichst gut mit dem Zustand $x_\tau^d$ der Trainingsdaten übereinstimmt. Es wird hierbei eine Minimierung des quadratischen Fehlers in Bezug auf die Matrizen A, Â, B, C und D und den Bias $\theta$ vorgenommen, welche die zu bestimmenden Parameter des rekurrenten neuronalen Netzes darstellen.

Nach dem ersten Schritt des Modellierens der Dynamik des technischen Systems werden die in diesem Schritt bestimmten Matrizen A, B, C und D sowie der Bias $\theta$ festgehalten, d.h. ihre Gewichte werden während des weiteren Trainings nicht verändert. Es werden nunmehr die Matrizen E und F sowie der Bias b aktiviert, welche in Fig. 2 dargestellt sind. Dies sind die einzigen Parameter während des zweiten Schritts des Lernens der Belohnungsregel. In diesem Lernschritt erhält das rekurrente neuronale Netz keine zukünftige Aktionen als externe Eingaben, sondern diese Aktionen werden mit dem Feed-Forward-Netz unter Berücksichtigung der Belohnungsregel gelernt. Darüber hinaus werden für vergangene Zeitschritte $\tau < t$ die Ausgabecluster $x_\tau$ weggelassen, da sie nur für die Modellierung der Dynamik im ersten Schritt benötigt wurden. Für zukünftige Zeitschritte $\tau > t$ des Netzwerkes wird die Fehlerfunktion gemäß Gleichung (4) ersetzt durch die Belohnungs- bzw. Kostenfunktion c(·), welche weiter unten in Gleichung (9) genannt ist. Dies wird in der Architektur durch die zusätzlichen Belohnungscluster $R_\tau$ erreicht, welche mit den Ausgabeclustern durch eine problemspezifische feste Matrix G, welche von der oben erwähnten Belohnungsfunktion c(·) abhängt, sowie einer möglichen Aktivierungsfunktion h innerhalb der Ausgabecluster $X_\tau$ verbunden sind. Somit wird durch das Netz RCNN die Belohnungsfunktion c(·) innerhalb der neuronalen Architektur codiert. Dies bedeutet, dass der Belohnungscluster $R_\tau$ nicht nur auf der Basis des Ausgabeclusters $x_\tau$ berechnet werden muss, sondern dass er auch allgemeiner beschrieben werden kann, wodurch auch kompliziertere Netzwerk-Architekturen ermöglicht werden. Beispielsweise kann die Belohnungsfunktion explizit gelernt werden, was insbesondere dann hilfreich ist, wenn c(·) nicht bekannt ist oder nur unvollständig spezifiziert ist. Dies kann durch ein weiteres zusätzliches dreischichtiges neuronales Netz mit der Ausgabe des RCNN als Eingaben erreicht werden.

Die Gewichte des Feed-Forward-Netzes werden nur gemäß der zurückpropagierten Belohnung von den Belohnungsclustern $R_\tau$ ($\tau > t$) adaptiert. Dies entspricht der Idee, dass der zweite Schritt des Lernens der Aktionsauswahlregel nicht zur Identifikation der Dynamik dient, sondern nur zum Lernen einer Regel, welche die Belohnung maximiert, wobei die Dynamik des Systems bereits zuvor modelliert wurde.

Der zweite Schritt des Lernens der Belohnungsregel kann durch die nachfolgenden Gleichungen (5) bis (9) mathematisch wiedergegeben werden. Dabei werden die Matrizen E und F sowie der Bias b gelernt. Die Gleichungen (5) bis (9) lauten wie folgt:

$$\bar{s}_\tau = \begin{cases} \tanh\left(\hat{A}\hat{s}_\tau + Da_\tau^d + \theta\right) & \forall \; \tau < t \\ \tanh\left(\hat{A}s_\tau + Da_\tau + \theta\right) & \forall \; \tau \ge t \end{cases} \qquad (5)$$

$$R_{\tau+1} = Gh(C\bar{s}_\tau) \quad \text{für alle } \tau \ge t \qquad (6)$$

mit

$$\hat{s}_\tau = \begin{cases} A\bar{s}_{\tau-1} + Bx_\tau^d & \forall\ \tau \le t \\ A\bar{s}_{\tau-1} + Bx_\tau & \forall\ \tau > t \end{cases} \tag{7}$$

und

$$a_\tau = a_{\tau-1} + Hf(F\tanh(E\hat{s}_\tau + b)) \quad \text{für alle } \tau \ge t \tag{8}$$

$$\sum_t \sum_{\tau > t} c(R_\tau) \to \min_{E,F,b} \tag{9}$$

Sowohl bei der Modellierung der Dynamik des technischen Systems gemäß den Gleichungen (1) bis (4) als auch bei dem Lernen der Belohnungsregel gemäß Gleichungen (5) bis (9) wird das rekurrente neuronale Netz mit den gleichen Trainingsmustern T und mit einem hinlänglich aus dem Stand der Technik bekannten Backpropagation-Verfahren gemäß Druckschrift [1] trainiert. Jedes Trainingsmuster T entspricht hierbei einem Zeitpunkt, dem entsprechende Trainingsdaten in der Form des Zustands des technischen Systems und der durchgeführten Aktion zu diesem Zeitpunkt zugeordnet sind. Der Schritt des Lernens der Belohnungsregel kann hierbei als Rückwärtspropagation des Fehlers der Belohnungsfunktion c(·) angesehen werden.

Die im Vorangegangenen beschriebene Ausführungsform des rekurrenten neuronalen Kontrollnetzwerks RCNN kombiniert in idealer Weise die Vorteile eines rekurrenten neuronalen Netzes RNN mit dynamisch konsistenter zeitlicher Entfaltung unter Berücksichtigung zukünftiger Zustände zur Identifikation der Dynamik mit einem dreischichtigen neuronalen Kontrollnetz zum Lernen der Belohnungsregel. Auf diese Weise wird eine hohe Approximationsgenauigkeit erreicht, und es können auch komplexe dynamische Systeme auf sehr dateneffiziente Weise gesteuert werden. Zusätzlich kann das System auf einfache Weise zu höheren Dimensionen skaliert werden, und eine nur teilweise beobachtbare Umgebung aus Zuständen des technischen Systems kann rekonstruiert werden. Ferner können mit dem Netz sehr gut kontinuierliche Zustandsräume und Aktionsräume verarbeitet werden.

Die anhand von Fig. 1 und Fig. 2 beschriebene Ausführungsform der Erfindung hat gegenüber der in der Patentanmeldung DE 10 2007 001 025.9 beschriebenen Ausführungsform den Vorteil, dass durch die Einbeziehung einer zu lernenden Gewichtsmatrix Â ein Flaschenhals zwischen versteckten Zuständen erzeugt wird, der das Netzwerk dazu zwingt, sich auf die wesentliche, autonome Struktur der Dynamik zu konzentrieren. Ferner wird durch die Berücksichtigung von Aktionen in der Form von Stellgrößen bzw. Steuerungsparametern, welche gegebenenfalls auch sog. "Null-Aktionen" (d.h. keine Veränderung der Stellgröße) umfassen können, die Möglichkeit geschaffen, durch Verwendung der speziellen Matrix H die Werte der Veränderungen der Stellgrößen an die Eigenschaften des technischen Systems zu adaptieren bzw. entsprechend zu beschränken. Insbesondere bei der Simulation von Gasturbinen ist die Beschränkung von Stellgrößen von besonderer Wichtigkeit, da die Stellgrößen in jedem Zeitschritt nur innerhalb beschränkter Intervall veränderbar sind.

Literaturverzeichnis:

[1] D.E. Rumelhart, G.E. Hinton, and R.J. Williams, "Learning internal representations by error propagation", in Parallel Distributed Processing: Explorations in The Microstructure of Cognition, D.E. Rumelhart and J.L.M. et al., Eds. Cambridge: MIT Press, 1986, vol. 1, pp. 318-362

[2] Leslie Pack Kaelbling; Michael L. Littman; Andrew W. Moore, Reinforcement Learning: A Survey, Journal of Artificial Intelligence Research 4 (1996) pp. 237-285

**Patentansprüche**

1.  Verfahren zur rechnergestützten Steuerung und/oder Regelung eines technischen Systems, bei dem:

a) das dynamische Verhalten des technischen Systems für mehrere Zeitpunkte (t) jeweils durch einen Zustand ($x_t$) des technischen Systems und eine am technischen System durchgeführte Aktion ($a_t$) charakterisiert wird, wobei eine jeweilige Aktion ($a_t$) zu einem jeweiligen Zeitpunkt (t) in einen neuen Zustand ($x_{t+1}$) des technischen Systems zum nächsten Zeitpunkt (t+1) führt;

b) das dynamische Verhalten des technischen Systems mit einem rekurrenten neuronalen Netz mit Hilfe von Trainingsdaten umfassend bekannte Zustände ($x_t^d$) und Aktionen ($a_t^d$) zu mehreren Zeitpunkten (t) modelliert wird, wobei das rekurrente neuronale Netz gebildet ist durch wenigstens eine Eingangsschicht (I) umfassend die Zustände ($x_t$) des technischen Systems und die am technischen System durchgeführten Aktionen ($a_t$) zu den mehreren Zeitpunkten (t), wenigstens eine versteckte rekurrente Schicht (HI) umfassend versteckte Zustände ($\hat{s}_t, \bar{s}_t$) und wenigstens eine Ausgangsschicht (O) umfassend die Zustände ($x_t$) des technischen Systems zu den mehreren Zeitpunkten (t), wobei

- die versteckten Zustände ($\hat{s}_t, \bar{s}_t$) zu einem jeweiligen Zeitpunkt (t) einen ersten versteckten Zustand ($\hat{s}_t$) und einen zweiten versteckten Zustand ($\bar{s}_t$) umfassen, wobei der Zustand ($x_t$) des technischen Systems zu dem jeweiligen Zeitpunkt (t) aus der Eingangsschicht (I) mit dem ersten versteckten Zustand ($\hat{s}_t$) verbunden ist und die Aktion ($a_t$) zu dem jeweiligen Zeitpunkt (t) aus der Eingangsschicht (I) mit dem zweiten versteckten Zustand ($\bar{s}_t$) verbunden ist,
- der erste versteckte Zustand ($\hat{s}_t$) zu dem jeweiligen Zeitpunkt (t) mit dem zweiten verstecken Zustand ($\bar{s}_t$) zu dem jeweiligen Zeitpunkt über eine Matrix ($\hat{A}$) gekoppelt ist, welche bei der Modellierung des dynamischen Verhaltens des technischen Systems gelernt wird; **dadurch gekennzeichnet, dass**

c) eine Aktionsauswahlregel gelernt wird, indem das rekurrente neuronale Netz für einen aktuellen und zukünftige Zeitpunkte (t) mit einem weiteren neuronalen Netz umfassend wenigstens eine Eingangsschicht (HI), wenigstens eine versteckte Schicht (R) umfassend versteckte Zustände ($r_t$) und wenigstens eine Ausgangsschicht (O') gekoppelt wird, wobei die Eingangsschicht (HI) des weiteren neuronalen Netzes zu einem jeweiligen Zeitpunkt (t) wenigstens einen Teil der versteckten Zustände ($\hat{s}_t$) des rekurrenten neuronalen Netzes zu dem jeweiligen Zeitpunkt (t) umfasst und die Ausgangsschicht (O') des weiteren neuronalen Netzes zu dem jeweiligen Zeitpunkt die am technischen System durchgeführte Aktion ($a_t$) und/oder die Veränderung ($\Delta a_t$) der am technischen System durchgeführten Aktion ($a_t$) gegenüber der zeitlich vorhergehende Aktion ($a_{t-1}$) umfasst;

d) Zustände ($x_t$) des technischen Systems und/oder am technischen System durchzuführende Aktionen ($a_t$) durch das mit dem weiteren neuronalen Netz gekoppelte rekurrente neuronale Netz mit gelernter Aktionsauswahlregel bestimmt werden.

2. Verfahren nach Anspruch 1, bei dem die ersten versteckten Zustände ($\hat{s}_t$) der versteckten rekurrenten Schicht (HI) des rekurrenten neuronalen Netzes jeweils eine erste Anzahl an Variablen umfassen und die zweiten versteckten Zustände ($\bar{S}_t$) der versteckten rekurrenten Schicht (HI) des rekurrenten neuronalen Netzes jeweils eine zweite Anzahl an Variablen umfassen, wobei die erste Anzahl unterschiedlich zur zweiten Anzahl ist.

3. Verfahren nach Anspruch 2, bei dem die erste Anzahl kleiner als die zweite Anzahl oder umgekehrt ist.

4. Verfahren nach einem der vorhergehenden Ansprüche, bei dem ein Zustand ($x_t$) des technischen Systems eine oder mehrere Umgebungsvariablen umfasst und/oder eine am technischen System durchzuführende Aktion ($a_t$) eine oder mehrere Aktionsvariablen umfasst und/oder ein versteckter Zustand ($r_t$) des weiteren neuronalen Netzes eine oder mehrere versteckte Variablen umfasst.

5. Verfahren nach Anspruch 4, bei dem die Anzahl der versteckten Variablen eines versteckten Zustands ($\hat{s}_t, \bar{s}_t, r_t$) des rekurrenten und/oder des Weiteren neuronalen Netzes kleiner ist als die Anzahl der Umgebungsvariablen eines Zustands ($x_t$) des technischen Systems.

6. Verfahren nach einem der vorhergehenden Ansprüche, bei dem eine Aktion ($a_t$) zumindest eines Teils der Aktionen ($a_t$) durch eine veränderbare Stellgröße des technischen Systems repräsentiert wird, wobei die Ausgangsschicht (O') des weiteren neuronalen Netzes zumindest teilweise zu einem jeweiligen Zeitpunkt (t) die Veränderung ($\Delta a_t$) der zu dem jeweiligen Zeitpunkt (t) durchgeführten Aktion ($a_t$) gegenüber der zeitlich vorhergehende Aktion ($a_{t-1}$) in der Form der Veränderung der Stellgröße umfasst.

7. Verfahren nach Anspruch 6, bei dem die Veränderung ($\Delta a_t$) der zu dem jeweiligen Zeitpunkt (t) durchgeführten Aktion ($a_t$) gegenüber der zeitlich vorhergehende Aktion ($a_{t-1}$) in der Ausgangsschicht (O') des weiteren neuronalen Netzes mit der Aktion ($a_t$) zu dem jeweiligen Zeitpunkt in der Eingangsschicht (I) des rekurrenten neuronalen Netzes über eine Kopplungsmatrix (H) gekoppelt ist.

**8.** Verfahren nach Anspruch 7, bei dem die Aktion ($a_t$) zu dem jeweiligen Zeitpunkt in der Eingangsschicht (I) des rekurrenten neuronalen Netzes mit der zeitlich vorhergehenden Aktion ($a_{t-1}$) über eine Einheitsmatrix gekoppelt ist.

**9.** Verfahren nach Anspruch 7 oder 8, bei dem durch die Kopplungsmatrix (H) die Veränderung ($\Delta a_t$) der zu dem jeweiligen Zeitpunkt (t) durchgeführten Aktion ($a_t$) gegenüber der zeitlich vorhergehende Aktion beschränkt und/oder skaliert wird.

**10.** Verfahren nach einem der vorhergehenden Ansprüche, bei dem eine Mehrzahl von diskreten, am technischen System durchführbare Aktionen ($a_t$) vorgegeben sind, wobei die Ausgangsschicht (O') des weiteren neuronalen Netzes zumindest teilweise zu einem jeweiligen Zeitpunkt (t) die am technischen System durchgeführte diskrete Aktion ($a_t$) umfasst.

**11.** Verfahren nach einem der vorhergehenden Ansprüche, bei dem die Eingangsschicht (HI) des Weiteren neuronalen Netzes zu einem jeweiligen Zeitpunkt den ersten versteckten Zustand ($\hat{s}_t$) des rekurrenten neuronalen Netzes zu dem jeweiligen Zeitpunkt (t) umfasst.

**12.** Verfahren nach einem der vorhergehenden Ansprüche, bei dem die Auswahlregel gemäß einer Bewertungsfunktion gelernt wird, welche ein oder mehrere Kriterien in Bezug auf die Zustände ($x_t$) des technischen Systems und/oder die am technischen System durchgeführten Aktionen ($a_t$) berücksichtigt und/oder welche in Schritt b) gelernt wird.

**13.** Verfahren nach Anspruch 12, bei dem die Bewertungsfunktion derart gewählt ist, dass sie ein optimales dynamisches Verhalten des technischen Systems parametrisiert.

**14.** Verfahren nach Anspruch 13, bei dem die Bewertungsfunktion durch eine zu optimierende Kostenfunktion repräsentiert wird.

**15.** Verfahren nach einem der vorhergehenden Ansprüche, bei dem zur Modellierung des dynamischen Verhaltens des technischen Systems mit dem rekurrenten neuronalen Netz der Fehler zwischen den durch das rekurrente neuronale Netz bestimmten Zuständen ($x_t$) und den Zuständen ($x_t^d$) der Trainingsdaten minimiert wird.

**16.** Verfahren nach einem der vorhergehenden Ansprüche, bei dem in Schritt b) des Anspruchs 1 ein nichtlineares dynamisches Verhalten des technischen Systems modelliert wird und/oder in Schritt c) des Anspruchs 1 eine nichtlineare Aktionsauswahlregel gelernt wird.

**17.** Verfahren nach einem der vorhergehenden Ansprüche bei dem zur Modellierung des dynamischen Verhaltens des technischen Systems mit dem rekurrenten neuronalen Netz in Schritt b) und/oder zum Lernen der Aktionsauswahlregel in Schritt c) ein Backpropagation-Verfahren verwendet wird.

**18.** Verfahren nach einem der vorhergehenden Ansprüche, bei dem das rekurrente neuronale Netz ein Netz mit dynamisch konsistenter zeitlicher Entfaltung unter Berücksichtigung zukünftiger Zustände ($x_t$) und Aktionen ($a_t$) ist.

**19.** Verfahren nach einem der vorhergehenden Ansprüche, bei dem die Modellierung des dynamischen Verhaltens des technischen Systems mit dem rekurrenten neuronalen Netz durch folgende Gleichungen repräsentiert wird:

$$\bar{s}_\tau = \tanh(\hat{A}\hat{s}_\tau + Da_\tau^d + \theta)$$

$$x_{\tau+1} = C\bar{s}_\tau$$

mit

$$\hat{s}_\tau = \begin{cases} A\overline{s}_{\tau-1} + Bx_\tau^d & \forall\ \tau \le t \\ A\overline{s}_{\tau-1} + Bx_\tau & \forall\ \tau > t \end{cases}$$

$$\sum_l \sum_\tau (x_\tau - x_\tau^d)^2 \to \min_{A,\hat{A},B,C,D,\theta}$$

wobei der Wertebereich von $\tau$ eine vorbestimmte Anzahl m von Zeitschritten vor dem Zeitpunkt t und eine vorbestimmte Anzahl n von Zeitschritten nach dem Zeitpunkt t umfasst;

wobei $t \in \{m,...,T - n\}$, wobei T die Anzahl an Zeitpunkten, für welche Trainingsdaten vorliegen;

wobei $x_\tau$ den durch das rekurrente neuronale Netz bestimmten Zustand des technischen Systems zum Zeitpunkt $\tau$ repräsentiert;

wobei $x_\tau^d$ den Zustand des technischen Systems zum Zeitpunkt $\tau$ gemäß den Trainingsdaten repräsentiert;

wobei $a_\tau$ die durch das rekurrente neuronale Netz bestimmte Aktion zum Zeitpunkt $\tau$ repräsentiert;

wobei $a_\tau^d$ die am technischen System zum Zeitpunkt $\tau$ durchgeführte Aktion gemäß den Trainingsdaten repräsentiert;

wobei $\hat{s}_\tau$ den ersten versteckten Zustand und $\overline{s}_\tau$ den zweiten versteckten Zustand zum Zeitpunkt $\tau$ der versteckten Schicht (HI) des rekurrenten neuronalen Netzes repräsentieren;

wobei I die Einheitsmatrix und $\hat{A}$, A, B, C, D zu bestimmende Matrizen und $\theta$ ein zu bestimmender Bias sind.

20. Verfahren nach Anspruch 19, bei dem das Lernen der Aktionsauswahlregel durch folgende Gleichungen repräsentiert wird:

$$\overline{s}_\tau = \begin{cases} \tanh\left(\hat{A}\hat{s}_\tau + Da_\tau^d + \theta\right) & \forall\ \tau < t \\ \tanh\left(\hat{A}\hat{s}_\tau + Da_\tau + \theta\right) & \forall\ \tau \ge t \end{cases}$$

$$R_{\tau+1} = Gh(C\overline{s}_\tau) \quad \text{für alle } \tau \ge t$$

mit

$$\hat{s}_\tau = \begin{cases} A\overline{s}_{\tau-1} + Bx_\tau^d & \forall\ \tau \le t \\ A\overline{s}_{\tau-1} + Bx_\tau & \forall\ \tau > t \end{cases}$$

und

$$a_\tau = a_{\tau-1} + Hf(F\tanh(E\hat{s}_\tau + b)) \quad \text{für alle } \tau \geq t$$

$$\sum_t \sum_{\tau>t} c(R_\tau) \to \min_{E,F,b}$$

wobei $G$ eine Matrix und h eine beliebige Aktivierungsfunktion ist, welche den Zustand $x_{\tau+1}$ des technischen Systems auf einen für die Kostenfunktion $c(\cdot)$ relevanten Zustand $R_{\tau+1}$ abbilden;
wobei f eine beliebige Aktivierungsfunktion ist;
wobei E und F zu bestimmende Matrizen und b ein zu bestimmender Bias sind;
wobei H eine beliebige Matrix zur Adaption der Veränderung der Aktion ($\alpha_t$) zum jeweiligen Zeitpunkt gegenüber der zeitlich vorhergehenden Aktion ($a_{t-1}$) ist.

21. Verfahren nach einem der vorhergehenden Ansprüche, bei dem das technische System eine Turbine, insbesondere eine Gasturbine, ist.

22. Verfahren nach einem der vorhergehenden Ansprüche, bei dem am Anfang des Steuerungsverfahrens zunächst die Schritte a) bis d) des Anspruchs 1 durchgeführt werden und anschließend das sich daraus ergebende mit dem weiteren neuronalen Netz gekoppelte rekurrente neuronale Netz mit gelernter Aktionsauswahlregel zur Bestimmung der Aktionen ($a_t$) verwendet wird.

23. Verfahren nach einem der Ansprüche 1 bis 19, bei dem während des Steuerungsverfahrens in regelmäßigen Abständen die Schritte a) bis d) des Anspruchs 1 durchgeführt werden, wobei bei der Durchführung dieser Schritte die sich während der Steuerung neu ergebenden Zustände ($x_t$) und Aktionen ($a_t$) als neue und/oder weitere Trainingsdaten berücksichtigt werden und wobei nach Durchführung dieser Schritte das sich daraus ergebende, mit dem weiteren neuronalen Netz gekoppelte rekurrente neuronale Netz mit gelernter Aktionsauswahlregel zur Auswahl weiterer Aktionen ($a_t$) verwendet wird.

24. Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

**Claims**

1. Method for computer-aided control and/or regulation of a technical system, in which:

a) the dynamic behaviour of the technical system is characterised respectively for a number of time points (t) by a state ($x_t$) of the technical system and an action ($a_t$) carried out on the technical system, a respective action (at) at a respective time point (t) resulting in a new state ($x_{t+1}$) of the technical system at the next time point (t+1);
b) the dynamic behaviour of the technical system with a recurrent neural network is modelled with the aid of training data comprising known states ($x_t^d$) and actions ($a_t^d$) at a number of time points (t), the recurrent neural network being formed by at least one input layer (I) comprising the states ($x_t$) of the technical system and the actions ($a_t$) carried out on the technical system at the number of time points (t), at least one hidden recurrent layer (HI) comprising hidden states ($\hat{s}_t, \bar{s}_t$) and at least one output layer (O) comprising the states ($x_t$) of the technical system at the number of time points (t), with

- the hidden states ($\hat{s}_t, \bar{s}_t$) at a respective time point (t) comprising a first hidden state ($\hat{s}_t$) and a second hidden state ($\bar{s}_t$), the state ($x_t$) of the technical system at the respective time point (t) from the input layer (I) being associated with the first hidden state ($\hat{s}_t$) and the action ($a_t$) at the respective time point (t) from the input layer (I) being associated with the second hidden state ($\bar{s}_t$),
- the first hidden state ($\hat{s}_t$) at the respective time point (t) being coupled to the second hidden state ($\bar{s}_t$) at the respective time point by way of a matrix (Â) which is learned during the modelling of the dynamic behaviour of the technical system;

c) an action selection rule is learned, by coupling the recurrent neural network for a current and future time point (t) to a further neural network comprising at least one input layer (HI), at least one hidden layer (R) comprising hidden states ($r_t$) and at least one output layer (O'), the input layer (HI) of the further neural network at a respective time point (t) comprising at least some of the hidden states ($\hat{s}_t$) of the recurrent neural network at the respective time point (t) and the output layer (O') of the further neural network at the respective time point comprising the action ($a_t$) carried out on the technical system and/or the change ($\Delta a_t$) in the action ($a_t$) carried out on the technical system compared with the temporally preceding action ($a_{t-1}$);

d) states ($x_t$) of the technical system and/or actions ($a_t$) carried out on the technical system are defined by the recurrent neural network coupled to the further neural network with learned action selection rules.

2. Method according to claim 1, in which the first hidden states ($\hat{s}_t$) of the hidden recurrent layer (HI) of the recurrent neural network respectively comprise a first number of variables and the second hidden states ($\bar{s}_t$) of the hidden recurrent layer (HI) of the recurrent neural network respectively comprise a second number of variables, the first number being different from the second number.

3. Method according to claim 2, in which the first number is smaller than the second number or vice versa.

4. Method according to one of the preceding claims, in which a state ($x_t$) of the technical system comprises one or more ambient variables and/or an action ($a_t$) to be carried out on the technical system comprises one or more action variables and/or a hidden state ($r_t$) of the further neural network comprises one or more hidden variables.

5. Method according to claim 4, in which the number of hidden variables of a hidden state ($\hat{s}_t, \bar{s}_t, r_t$) of the recurrent and/or further neural network is smaller than the number of ambient variables of a state ($x_t$) of the technical system.

6. Method according to one of the preceding claims, in which one action ($a_t$) of at least of some of the actions ($a_t$) is represented by a changeable manipulated variable of the technical system, with the output layer (O') of the further neural network at a respective time point (t) at least partially comprising the change ($\Delta a_t$) in the action ($a_t$) carried out at the respective time point (t) compared with the temporally preceding action ($a_{t-1}$) in the form of the change in the manipulated variable.

7. Method according to claim 6, in which the change ($\Delta a_t$) in the action ($a_t$) carried out at the respective time point (t) compared with the temporally preceding action ($a_{t-1}$) in the output layer (O') of the further neural network is coupled to the action ($a_t$) at the respective time point in the input layer (I) of the recurrent neural network by way of a coupling matrix (H).

8. Method according to claim 7, in which the action ($a_t$) at the respective time point in the input layer (I) of the recurrent neural network is coupled to the temporally preceding action ($a_{t-1}$) by way of a unit matrix.

9. Method according to claim 7 or 8, in which the coupling matrix (H) restricts and/or scales the change ($\Delta a_t$) in the action ($a_t$) carried out at the respective time point (t) compared with the temporally preceding action.

10. Method according to one of the preceding claims, in which a number of discrete actions ($a_t$) that can be carried out on the technical system are predetermined, the output layer (O') of the further neural network at a respective time point (t) at least partially comprising the discrete action ($a_t$) carried out on the technical system.

11. Method according to one of the preceding claims, in which the input layer (HI) of the further neural network at a respective time point comprises the first hidden state ($\hat{s}_t$) of the recurrent neural network at the respective time point (t).

12. Method according to one of the preceding claims, in which the selection rule is learned according to an evaluation function, which takes into account one or more criteria relating to the states ($x_t$) of the technical system and/or the actions ($a_t$) carried out on the technical system and/or which is learned in step b).

13. Method according to claim 12, in which the evaluation function is selected so that it parameterises an optimal dynamic behaviour of the technical system.

14. Method according to claim 13, in which the evaluation function is represented by a cost function to be optimised.

15. Method according to one of the preceding claims, in which to model the dynamic behaviour of the technical system with the recurrent neural network the error between the states ($x_t$) defined by the recurrent neural network and the states ($x_t^d$) of the training data is minimised.

16. Method according to one of the preceding claims, in which in step b) of claim 1 a nonlinear dynamic behaviour of the technical system is modelled and/or in step c) of claim 1 a nonlinear action selection rule is learned.

17. Method according to one of the preceding claims, in which to model the dynamic behaviour of the technical system with the recurrent neural network in step b) and/or to learn the action selection rule in step c) a backpropagation method is used.

18. Method according to one of the preceding claims, in which the recurrent neural network is a network with dynamically consistent temporal deconvolution taking into account future states ($x_t$) and actions ($a_t$).

19. Method according to one of the preceding claims, in which modelling of the dynamic behaviour of the technical system with the recurrent neural network is represented by the following equations:

$$\overline{s}_\tau = \tanh(\hat{A}\hat{s}_\tau + Da_\tau^d + \theta)$$

$$x_{\tau+1} = C\overline{s}_\tau$$

with

$$\hat{s}_\tau = \begin{cases} A\overline{s}_{\tau-1} + Bx_\tau^d & \forall\ \tau \le t \\ A\overline{s}_{\tau-1} + Bx_\tau & \forall\ \tau > t \end{cases}$$

$$\sum_t \sum_\tau (x_\tau - x_\tau^d)^2 \to \min_{A,\hat{A},B,C,D,\theta}$$

where the value range of $\tau$ comprises a predetermined number m of time steps before the time point t and a predetermined number n of time steps after the time point t;
where $t \in \{m,..., T - n\}$, where T is the number of time points, for which training data is present;
where $x_\tau$ represents the state of the technical system at time point $\tau$ defined by the recurrent neural network;

where $x_\tau^d$ represents the state of the technical system at time point $\tau$ according to the training data;

where $a_\tau$ represents the action at time point $\tau$ defined by the recurrent neural network;

where $a_\tau^d$ represents the action carried out on the technical system at time point $\tau$ according to the training data;
where $\hat{s}_\tau$ represents the first hidden state and $\overline{s}_\tau$ the second hidden state at time point $\tau$ of the hidden layer (HI) of the recurrent neural network;
where $I$ is the unit matrix and $\hat{A}$, A, B, C, D are the matrices to be defined and $\theta$ is a bias to be defined.

**20.** Method according to claim 19, in which the learning of the action selection rule is represented by the following equations:

$$\bar{s}_\tau = \begin{cases} \tanh\left(\hat{A}\hat{s}_\tau + Da_\tau^d + \theta\right) & \forall\ \tau < t \\ \tanh\left(\hat{A}\hat{s}_\tau + Da_\tau + \theta\right) & \forall\ \tau \geq t \end{cases}$$

$$R_{\tau+1} = Gh(C\bar{s}_\tau) \qquad \text{for all } \tau \geq t$$

with

$$\hat{s}_\tau = \begin{cases} A\bar{s}_{\tau-1} + Bx_\tau^d & \forall\ \tau \leq t \\ A\bar{s}_{\tau-1} + Bx_\tau & \forall\ \tau > t \end{cases}$$

and

$$a_\tau = a_{\tau-1} + Hf(F\tanh(E\hat{s}_\tau + b)) \qquad \text{for all } \tau \geq t$$

$$\sum_t \sum_{\tau > t} c(R_\tau) \rightarrow \min_{E,F,b}$$

where $G$ is a matrix and h any activation function, mapping the state $x_{\tau+1}$ of the technical system onto a state $R_{\tau+1}$ of relevance to the cost function $c(\cdot)$;
where f is any activation function;
where E and F are matrices to be defined and b is a bias to be defined;
where H is any matrix for adapting the change in the action ($\alpha_t$) at the respective time point compared with the temporally preceding action ($\alpha_{t-1}$).

**21.** Method according to one of the preceding claims, in which the technical system is a turbine, in particular a gas turbine.

**22.** Method according to one of the preceding claims, in which at the start of the control method steps a) to d) of claim 1 are first carried out and then the resulting recurrent neural network with the learned action selection rule coupled to the further neural network is used to define the actions ($a_t$).

**23.** Method according to one of claims 1 to 19, in which during the control method steps a) to d) of claim 1 are carried out at regular intervals, with the new states ($x_t$) and actions ($a_t$) resulting during the control being taken into account as new and/or further training data when said steps are carried out and in which after said steps have been carried out, the resulting recurrent neural network with the learned action selection rule coupled to the further neural network is used to select further actions ($a_t$).

24. Computer program product with a program code stored on a machine-readable medium for carrying out the method as claimed in one of the preceding claims, when the program is running on a computer.

**Revendications**

1. Procédé de commande et/ou de régulation d'un système technique assistées par ordinateur, dans lequel :

a) le comportement dynamique du système technique est caractérisé, pour plusieurs instants (t), respectivement par un état ($x_t$) du système technique et une action ($a_t$) exécutée sur le système technique, une action respective ($a_t$) à un instant respectif (t) menant à un nouvel état ($x_{t+1}$) du système technique à l'instant suivant (t+1) ;
b) le comportement dynamique du système technique est modélisé avec un réseau neuronal récurrent à l'aide de données d'apprentissage comprenant des états ($x_t^d$) et actions connus ($a_t^d$) à plusieurs instants (t), le réseau neuronal récurrent étant formé par au moins une couche d'entrée (I) comprenant les états ($x_t$) du système technique et les actions ($a_t$) exécutées sur le système technique aux plusieurs instants (t), au moins une couche récurrente cachée (HI) comprenant des états cachés ($\hat{s}_t$, $\bar{s}_t$) et au moins une couche de sortie (O) comprenant les états ($x_t$) du système technique aux plusieurs instants (t) ;

- les états cachés ($\hat{s}_t$, $\bar{s}_t$) comprenant, à un instant respectif (t), un premier état caché ($\hat{s}_t$) et un deuxième état caché ($\bar{s}_t$) , l'état ($x_t$) du système technique à l'instant respectif (t) de la couche d'entrée (I) étant lié au premier état caché ($\hat{s}_t$) et l'action ($a_t$) à l'instant respectif (t) de la couche d'entrée (I) étant liée au deuxième état caché ($\bar{s}_t$) ;
- le premier état caché ($\hat{s}_t$) à l'instant respectif (t) étant couplé au deuxième état caché ($\bar{s}_t$) à l'instant respectif via une matrice (Â) dont l'apprentissage se fait lors de la modélisation du comportement dynamique du système technique, **caractérisé en ce que** :

c) une règle de sélection d'action est apprise par le fait que le réseau neuronal récurrent est couplé, pour un instant actuel et pour des instants futurs (t), à un autre réseau neuronal comprenant au moins une couche d'entrée (HI), au moins une couche cachée (R) comprenant des états cachés ($r_t$) et au moins une couche de sortie (O'), la couche d'entrée (HI) de l'autre réseau neuronal comprenant, à un instant respectif (t), au moins une partie des états cachés ($\hat{s}_t$) du réseau neuronal récurrent à l'instant respectif (t) et la couche de sortie (O') de l'autre réseau neuronal comprenant, à l'instant respectif, l'action ($a_t$) exécutée sur le système technique et/ou la modification ($\Delta a_t$) de l'action ($a_t$) exécutée sur le système technique par rapport à l'action ($a_{t-1}$) qui précède dans le temps ;
d) des états ($x_t$) du système technique et/ou des actions ($a_t$) à exécuter sur le système technique sont déterminés par le réseau neuronal récurrent couplé à l'autre réseau neuronal au moyen de la règle de sélection d'action apprise.

2. Procédé selon la revendication 1, dans lequel les premiers états cachés ($\hat{s}_t$) de la couche récurrente cachée (HI) du réseau neuronal récurrent comprennent respectivement un premier nombre de variables et les deuxièmes états cachés ($\bar{s}_t$) de la couche récurrente cachée (HI) du réseau neuronal récurrent comprennent respectivement un deuxième nombre de variables, le premier nombre étant différent du deuxième nombre.

3. Procédé selon la revendication 2, dans lequel le premier nombre est inférieur au deuxième nombre ou inversement.

4. Procédé selon l'une des revendications précédentes, dans lequel un état ($x_t$) du système technique comprend une ou plusieurs variables d'environnement et/ou une action ($a_t$) à exécuter sur le système technique comprend une ou plusieurs variables d'action et/ou un état caché ($r_t$) de l'autre réseau neuronal comprend une ou plusieurs variables cachées.

5. Procédé selon la revendication 4, dans lequel le nombre de variables cachées d'un état caché ($\hat{s}_t$, $\bar{s}_t$, $r_t$) du réseau neuronal récurrent et/ou de l'autre réseau neuronal est inférieur au nombre de variables d'environnement d'un état ($x_t$) du système technique.

6. Procédé selon l'une des revendications précédentes, dans lequel une action ($a_t$) d'au moins une partie des actions

(a$_t$) est représentée par une grandeur de réglage variable du système technique, la couche de sortie (O') de l'autre réseau neuronal comprenant au moins en partie, à l'instant respectif (t), sous la forme de la modification de la grandeur de réglage, la modification ($\Delta$a$_t$) de l'action (a$_t$) exécutée à l'instant respectif (t) par rapport à l'action (a$_{t-1}$) qui précède dans le temps.

**7.** Procédé selon la revendication 6, dans lequel la modification ($\Delta$a$_t$) de l'action (a$_t$) exécutée à l'instant respectif (t) par rapport à l'action (a$_{t-1}$) qui précède dans le temps dans la couche de sortie (O') de l'autre réseau neuronal est couplée à l'action (a$_t$) à l'instant respectif dans la couche d'entrée (I) du réseau neuronal récurrent via une matrice de couplage (H).

**8.** Procédé selon la revendication 7, dans lequel l'action (a$_t$) à l'instant respectif dans la couche d'entrée (I) du réseau neuronal récurrent est couplée à l'action (a$_{t-1}$) qui précède dans le temps via une matrice unitaire.

**9.** Procédé selon la revendication 7 ou 8, dans lequel la modification ($\Delta$a$_t$) de l'action (a$_t$) exécutée à l'instant respectif (t) par rapport à l'action qui précède dans le temps est limitée et/ou mise à l'échelle par la matrice de couplage (H).

**10.** Procédé selon l'une des revendications précédentes, dans lequel une pluralité d'actions (a$_t$) discrètes exécutables sur le système technique sont données, la couche de sortie (O') de l'autre réseau neuronal comprenant au moins en partie, à l'instant respectif (t), l'action (a$_t$) discrète exécutée sur le système technique.

**11.** Procédé selon l'une des revendications précédentes, dans lequel la couche d'entrée (HI) de l'autre réseau neuronal comprend, à l'instant respectif, le premier état caché ($\hat{s}_t$) du réseau neuronal récurrent à l'instant respectif (t).

**12.** Procédé selon l'une des revendications précédentes, dans lequel la règle de sélection s'apprend conformément à une fonction d'évaluation qui tient compte d'un ou de plusieurs critères relatifs aux états (x$_t$) du système technique et/ou aux actions (a$_t$) exécutées sur le système technique et/ou s'apprend à l'étape b).

**13.** Procédé selon la revendication 12, dans lequel la fonction d'évaluation est choisie de manière telle qu'elle paramétrise un comportement dynamique optimal du système technique.

**14.** Procédé selon la revendication 13, dans lequel la fonction d'évaluation est représentée par une fonction de coût à optimiser.

**15.** Procédé selon l'une des revendications précédentes, dans lequel l'erreur entre les états (x$_t$) déterminés par le réseau neuronal récurrent et les états (x$_t^d$) des données d'apprentissage est minimisée pour modéliser le comportement dynamique du système technique avec le réseau neuronal récurrent.

**16.** Procédé selon l'une des revendications précédentes, dans lequel, à l'étape b) de la revendication 1, un comportement dynamique non linéaire du système technique est modélisé et/ou, à l'étape c) de la revendication 1, une règle non linéaire de sélection d'action est apprise.

**17.** Procédé selon l'une des revendications précédentes, dans lequel un procédé de rétropropagation est utilisé pour modéliser le comportement dynamique du système technique avec le réseau neuronal récurrent à l'étape b) et/ou pour apprendre la règle de sélection d'action à l'étape c).

**18.** Procédé selon l'une des revendications précédentes, dans lequel le réseau neuronal récurrent est un réseau à déconvolution temporelle dynamiquement consistante compte tenu d'états (x$_t$) et d'actions (a$_t$) futurs.

**19.** Procédé selon l'une des revendications précédentes, dans lequel la modélisation du comportement dynamique du système technique avec le réseau neuronal récurrent est représentée par les équations suivantes :

$$\bar{s}_\tau = \tanh(A\hat{s}_\tau + Da_\tau^d + \theta)$$

$$x_{\tau+1} = C\bar{s}_{\tau}$$

avec

$$\hat{s}_\tau = \begin{cases} A\bar{s}_{\tau-1} + Bx_\tau^d & \forall \; \tau \le t \\ A\bar{s}_{\tau-1} + Bx_\tau & \forall \; \tau > t \end{cases}$$

$$\sum_t \sum_\tau (x_\tau - x_\tau^d)^2 \to \min_{A,\hat{A},B,C,D,\theta}$$

la plage de valeurs de $\tau$ comprenant un nombre prédéterminé m d'intervalles de temps avant l'instant t et un nombre prédéterminé n d'intervalles de temps après l'instant t ;

avec $t \in \{m, ..., T-n\}$, T étant le nombre d'instants pour lesquels on a des données d'apprentissage ;

$x_\tau$ représentant l'état du système technique déterminé par le réseau neuronal récurrent à l'instant $\tau$ ;

$x_\tau^d$ représentant l'état du système technique à l'instant $\tau$ conformément aux données d'apprentissage ;

$\alpha_\tau$ représentant l'action déterminée par le réseau neuronal récurrent à l'instant $\tau$ ;

$a_\tau^d$ représentant l'action exécutée sur le système technique à l'instant $\tau$ conformément aux données d'apprentissage ;

$\hat{s}_\tau$ représentant le premier état caché et $\bar{s}_\tau$ représentant le deuxième état caché à l'instant $\tau$ de la couche cachée (HI) du réseau neuronal récurrent ;

I étant la matrice unitaire et Â, A, B, C, D étant des matrices à déterminer et θ étant un décalage à déterminer.

**20.** Procédé selon la revendication 19, dans lequel l'apprentissage de la règle de sélection d'action est représenté par les équations suivantes :

$$\bar{s}_\tau = \begin{cases} \tanh\left(\hat{A}\hat{s}_\tau + Da_\tau^d + \theta\right) & \forall \; \tau < t \\ \tanh\left(\hat{A}\hat{s}_\tau + Da_\tau + \theta\right) & \forall \; \tau \ge t \end{cases}$$

$$R_{\tau+1} = Gh(C\bar{s}_\tau) \quad \text{pour tous les } \tau \ge t$$

avec

$$\hat{s}_\tau = \begin{cases} A\bar{s}_{\tau-1} + Bx_\tau^d & \forall\ \tau \le t \\ A\bar{s}_{\tau-1} + Bx_\tau & \forall\ \tau > t \end{cases}$$

et

$$a_\tau = a_{\tau-1} + Hf(F\tanh(E\hat{s}_\tau + b)) \quad \text{pour tous les } \tau \ge t$$

$$\sum_t \sum_{\tau > t} c(R_\tau) \to \min_{E, F, b}$$

G étant une matrice et h, une fonction d'activation quelconque qui appliquent l'état $x_{\tau+1}$ du système technique sur un état $R_{\tau+1}$ pertinent pour la fonction de coût $c(\cdot)$ ;

f étant une fonction d'activation quelconque ;

E et F étant des matrices à déterminer et b, un décalage à déterminer ;

H étant une matrice quelconque pour l'adaptation de la modification de l'action ($a_t$) à l'instant respectif par rapport à l'action ($a_{t-1}$) qui précède dans le temps.

**21.** Procédé selon l'une des revendications précédentes, dans lequel le système technique est une turbine, et plus particulièrement une turbine à gaz.

**22.** Procédé selon l'une des revendications précédentes, dans lequel, tout d'abord, les étapes a) à d) de la revendication 1 sont exécutées au début du procédé de commande et, ensuite, le réseau neuronal récurrent qui en résulte et est couplé à l'autre réseau neuronal est utilisé avec la règle de sélection d'action apprise pour déterminer les actions ($a_t$).

**23.** Procédé selon l'une des revendications 1 à 19, dans lequel les étapes a) à d) de la revendication 1 sont exécutées pendant le procédé de commande à intervalles réguliers, les nouveaux états ($x_t$) et actions ($a_t$) résultants pendant la commande étant pris en compte en tant que données d'apprentissage nouvelles et/ou supplémentaires pendant l'exécution de ces étapes et, après l'exécution de ces étapes, le réseau neuronal récurrent qui en résulte et est couplé à l'autre réseau neuronal étant utilisé avec la règle de sélection d'action apprise pour sélectionner d'autres actions ($a_t$).

**24.** Produit de programme informatique avec un code de programme stocké sur un support lisible par machine pour réaliser le procédé selon l'une des revendications précédentes lorsque le programme tourne sur un ordinateur.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007001025

- WO 0062250 A2

**In der Beschreibung aufgeführte Nicht-Patentliteratur**

- Learning internal representations by error propagation. **D.E. RUMELHART ; G.E. HINTON ; R.J. WIL-LIAMS et al.** Parallel Distributed Processing: Explorations in The Microstructure of Cognition. MIT Press, 1986, vol. 1, 318-362

- **LESLIE PACK KAELBLING ; MICHAEL L. LITTMAN ; ANDREW W. MOORE.** Reinforcement Learning: A Survey. *Journal of Artificial Intelligence Research,* 1996, vol. 4, 237-285